# EUROPÄISCHE PATENTSCHRIFT

(11) **EP 0 811 897 B1**
(45) Veröffentlichungstag und Bekanntmachung des Hinweises auf die Patenterteilung: **12.02.2003**
(21) Anmeldenummer: 97107554.4
(22) Anmeldetag: 07.05.1997
(51) Int. Cl.: G05B 19/18

(54) **Schleifverfahren für eine rechnergestützte Werkzeugmaschine, insbesondere Schleifmaschine zum Formschleifen, vor allem von Steuernocken einer Nockenwelle**
Grinding method for a computer-aided machine tool, in particular grinding machine for grinding shapes, mainly for cams of a camshaft
Procédé de meulage pour une machine outil assistée par ordinateur, en particulier pour le meulage de forme, en premier lieu le meulage des cames d'un arbre à cames

(30) Priorität: 07.06.1996 DE 19622767
(43) Veröffentlichungstag der Anmeldung: 10.12.1997
(73) Patentinhaber: Bayerische Motoren Werke Aktiengesellschaft, 80788 München (DE)
(72) Erfinder: Seitlinger, Klaus, 4400 Steyr (AT); Infanger, Josef, 3352 Ertl (AT); Mitterauer, Johann, 4523 Neuzeug (AT)

(56) Entgegenhaltungen:
- DE-A- 2 918 249
- US-A- 4 031 445
- US-A- 5 419 222

## Beschreibung

Die Erfindung bezieht sich gemäß dem Oberbegriff des Patentanspruches 1 auf ein aus der DE-OS 29 18 249 bekanntes Schleifverfahren für eine rechnergestützte Werkzeugmaschine.

Bei diesem bekannten Verfahren wird nach dem Umfangsbearbeiten eines ersten Werkstückes dessen Ist-Kontur abgetastet, mit der vorgeschlagenen Soll-Kontur verglichen und festgestellte Abweichungen zwischen Soll- und Ist-Kontur zur Korrektur der Soll-Kontur für die weitere Bearbeitung der Werkstücke verwendet mit dem Ziel, maschinenbedingte Abweichungen von der vorgegebenen Soll-Kontur auszugleichen und die korrigierte Soll-Kontur äußerst wirtschaftlich und mit ausreichender Genauigkeit am Werkstück zu realisieren.

Weiter wird zur Aufrechterhaltung einer hohen Fertigungsgenauigkeit vorgeschlagen, in bestimmten Zeitabständen die Ist-Kontur der Werkstücke mit der angepaßten Soll-Kontur zu vergleichen und auftretende Abweichungen für die weitere Fertigung als Korrekturwerte wieder zu berücksichtigen.

Zur Durchführung des bekannten Verfahrens ist eine kombinierte Anordnung und Koppelung einer Meßeinrichtung zum Erfassen der Ist-Kontur eines zunächst mit der Soll-Kontur bearbeiteten Werkstückes und einem elektronischen Rechner zum Vergleichen der Ist-Kontur mit der im Speicher programmierten Soll-Kontur vorgesehen zur Ermittlung einer die gemessenen Abweichungen berücksichtigenden, in einem zweiten Speicher programmierbaren Bearbeitungskontur für die weitere Steuerung des Werkzeugträgers. Ferner kann die Bearbeitungskontur im zweiten Speicher nach jeder Meßoperation neu programmiert werden um maschinen- und bearbeitungsbedingte Einflüsse im wesentlichen zu eliminieren.

Weiter ist aus der US-A 4,873,793 ein Schleifverfahren für eine rechnergestützte Werkzeugmaschine bekannt, bei der die Steuerung eines Schleifabtrages auf der Subtraktion eines durch direkte/indirekte Werkstückmessungen gebildeten Datensatzes von einem die fertige Form respräsentierenden Fertigform-Datensatz in der Maschine basiert. Bei dieser Schleifmaschine wird die während der Bearbeitung auftretende eigentypische Dynamik dieser Maschine nicht berücksichtigt, so daß trotz Programmsteuerung Werkstücke mit maschinenbedingt verursachten Formfehlern produziert werden.

Hinsichtlich der Problematik maschinenbedingt verursachter Formfehler bei Schleifverfahren sind ferner die DE-A 40 23 587 und die DE-C 37 02 594 zu nennen mit einer vom Anmeldegegenstand unterschiedlichen Lösung.

Für das Verfahren der erstgenannten Druckschrift ist wesentlich, daß die gemessene Abweichung mit Schwellwerten verglichen wird und daß bei Unterschreiten der Schwellwerte eine vorbestimmte Anzahl von Schritten beim Umfangsschleifen übersprungen wird. Beim Verfahren des zweitgenannten Dokumentes ist wesentlich, daß die von einem Soll-Wert gemessene Abweichung mit einem Korrekturfaktor gewichtet den Verschiebeweg für das Schleifwerkzeug ergibt.

Schließlich ist aus der US-A 5,419 222 ein Verfahren sowie eine Vorrichtung zur kontinuierlichen Konturmessung eines Werkstückes in einer Werkzeugmaschine bekannt, wobei über die ermittelten Maß- und Formabweichungen mittels eines Rechners die Werkzeugmaschine gesteuert ist.

Bei keinem der vorgenannten Verfahren ist auf die bei den Schleifvorgängen gegebenen, für die eigentypische Dynamik der Werkzeugmaschine wesentlichen Drehzahlanpassungen eingegangen.

Der Erfindung liegt daher die Aufgabe zugrunde, das gattungsgemäße Schleifverfahren dahingehend zu verbessern, daß eine ggf. erforderliche Drehzahlanpassung lediglich beim Übergang von einem Formbereich in den anderen erfolgt und die eventuell angepaßte Drehzahl- bzw. Drehwinkelgeschwindigkeit des Schleifwerkzeuges zumindest über den jeweiligen Formbereich im wesentlichen konstant gehalten ist.

Diese Aufgabe ist mit dem Patentanspruch 1 gelöst. Der Vorteil der Erfindung ist, daß mit dem Vorhalten der durch die eigentypische Maschinendynamik verursachten, erfindungsgemäß erfaßten und verarbeiteten Form-Abweichungen vergleichmäßigte Schleifabtrag-Zustellungen erzielt sind mit dem weiteren Vorteil eines geringstmöglichen Aufmaßes für die Form-Endbearbeitung, wobei in weiterer vorteilhafter Weise eine Bearbeitung des jeweiligen Formbereiches am Werkstück mit konstanter Drehzahl bzw. Drehwinkelgeschwindigkeit ermöglicht ist mit vorteilhaft kürzerer Takt- bzw. Maschinenlaufzeit. Erzielt ist damit ein vergleichmäßigtes Schnittvolumen bei im wesentlichen konstanter Belastung und damit geringeren Erschütterungen der Werkzeugmaschine mit verringerter Form-Fehlerverursachung.

Die Erfindung ist im folgenden beschrieben, für ein Schleifverfahren einer rechnergestützten Schleifmaschine zum Formschleifen von Steuemocken einer Ventiltriebs-Nockenwelle.

Zunächst wird eine derartige Nockenwelle mit geringem Schleifaufmaß unter besten Bedingungen ohne Berücksichtigung der produzierten Abweichungen vom Soll gefertigt, wobei ein jeweiliger Schleifabtrag je vorbestimmten Bearbeitungsschritt in Umfangsrichtung eines Formbereiches mittels eines die fertige Steuernocken-Form repräsentierenden Maschinen-Datensatzes durch relative Zustellung und/oder Drehzahlanpassung des Schleifwerkzeuges bestimmt ist.

Anschließend wird jeder Steuemocken der Nockenwelle z.B. in einer Zylinderkoordinaten-Meßmaschine vermessen zur Erfassung der jeweiligen Form/Maßabweichungen vom Soll, die durch die eigentypische Dynamik der Schleifmaschine verursacht sind. Die jeweiligen Meßwerte der Form-/Maßabweichungen vom Soll jedes Steuernockens bilden einen Maschinen-Formfehler-Datensatz.

Diese beispielsweise pro Grad in Umfangsrichtung des jeweiligen Steuemockens gemessenen Abweichungen werden mit einem Null-Datenfeld subtrahiert, wobei durch Subtraktion des o.g. Maschinen-Formfehler-Datensatzes mit dem auf einer Abszisse als Null-Linie abgebildeten bzw. bezogenen, auf Konstruktionsdaten basierenden Fertigform-Datensatz ein Formfehler-Vorhalte-Datensatz zur Eliminierung der maschinenbedingten Formfehler erzeugt wird.

Mit diesem anstelle des Fertigform-Datensatzes in die Schleifmaschine eingegebenen Formfehler-Vorhalte-Datensatzes ist grundsätzlich ein verbessertes Fertigschleifen jedes Steuernockens möglich. Damit ist zumindest für eine Form-Endbearbeitung bzw. Feinbearbeitung ein Datensatz erzielt mit gegenüber der Fertigform um maschinenbedingt verursachte Formfehler entsprechend vorgehaltenen Steuerdaten für die jeweilige Zustellung bei im wesentlichen vorbestimmt konstanter Drehzahl bzw. konstanter Drehwinkelgeschwindigkeit des Schleifwerkzeuges über dem jeweiligen Formbereich.

Bei einem Steuemocken gelten als wesentliche Formbereiche die Nockenerhebung sowie der Grundkreis, die nach einem weiteren erfindungsgemäßen Merkmal je für sich auf Abweichung vom Soll vermessen und diese Meßdaten in gesonderten Datensätzen erfaßt werden. Dies ermöglicht in vorteilhafter Weise, daß diese beiden Datensätze für jeden Steuernocken nach einer Korrektur der geometrischen Zuordnung der verschiedenen Formbereiche einen für beide gemeinsamen Formfehler-Vorhalte-Datensatz bilden. Durch die damit verbundene Trennung der Nocken-Erhebung als einem Formbereich vom Grundkreis als weiterem Formbereich eines jeweiligen Steuemockens kann die Lage des Grundkreises relativ zur Drehachse der Nockenwelle und damit eine vorhandene Exzentrizität behoben werden.

Das erfindungsgemäße Schleifverfahren ermöglicht weiter zur maschinellen Messung der Soll-Abweichungen als mechanischen Meßabtaster eine Rolle in den Abmessungen der im Ventiltrieb vorgesehenen Rollen zu verwenden zur vorteilhaften Steigerung der Übertragungsgüte im Ventiltrieb. Da im Gegensatz zu den beispielsweise mittels Laser ermittelten Meßdaten für einen ersten Formfehler-Vorhalte-Datensatz die mit der Rolle aufgrund ihres räumlich ausgedehnten Berührungsbereiches ermittelten Meßdaten "falsch" sind, ist vorgesehen, daß die durch den räumlich ausgedehnten Berührungsbereich des als Rolle dienenden Abtasters - Vorlauf der Rolle durch ihren Meßradius - jeweils einen falschen Ort der Soll-Abweichung beschreibenden Meßdaten mittels eines Rechenprogrammes lagekorrigiert in einen maschinenverwendbaren Formfehler-Vorhalte-Datensatz eingeschrieben werden, wobei die Vorhalte-Werte beispielsweise in Punktkoordinaten umgerechnet werden können.

Der mittels Fehlerinvertierung gebildete, erste Formfehler-Vorhalte-Datensatz für jeden Steuemocken, eventuell korrigiert um die gegenseitige Zuordnung von Grundkreis und Nocken-Erhebung sowie ggf. korrigiert in dem durch eine Rolle ermittelten Meßwerten, wird archiviert als Datenausgangsfeld für die jeweilige Meßmaschine zu weiteren Optimierungen.

Zur weiteren Generierung eines Formfehler-Vorhalte-Datensatzes mit erfindungsgemäß weiter minimierten Vorhaltewerten wird die zuerst bearbeitete Nockenwelle mit gering verbliebenem Aufmaß oder ggf. eine weitere Nockenwelle mit maximal 0,2 mm Aufmaß unter Fertigungsbedingungen in der gleichen Schleifmaschine nach dem vorangehend erstellten ersten Formfehler-Vorhalte-Datensatz bearbeitet. Deren Steuernocken werden mittels einer anschließenden, o.g. Vermessung in neuen Datensätzen erfaßt, die durch Subtraktion von entsprechend vorangehend erstellten Formfehler-Vorhalte-Datensätzen durch minimierte Vorhaltewerte verfeinerte Formfehler-Vorhalte-Datensätze ergeben.

Durch auf die vorbeschriebene Weise fortgesetzte Erzeugung von ständig weiter verfeinerten Formfehler-Vorhalte-Datensätzen können unter eventueller Einbeziehung der einen oder anderen vorbeschriebenen Detailkorrektur für die Fertigung Formfehler-Vorhalte-Datensätze mit vorbestimmter Fehlerminimierung erzeugt werden, wodurch bei einem maximalen Aufmaß von 0,2 mm für die Form-Endbearbeitung bzw. Feinbearbeitung jedes Steuernockens der Nockenwelle mit konstanter Drehzahl bzw. konstanter Drehwinkelgeschwindigkeit des Schleifwerkzeuges im Grundkreis sowie in der Nockenerhebung kurze Bearbeitungs- bzw. Taktzeiten bei hoher Formgenauigkeit erzielt sind.

## Patentansprüche

1. Schleifverfahren für eine rechnergestützte Werkzeugmaschine zum Formschleifen,
- wobei ein jeweiliger Schleifabtrag von einem Werkstück je vorbestimmten Bearbeitungsschritt eines Formbereiches mittels eines auf Konstruktionsdaten basierenden Maschinen- bzw. Fertigform-Datensatzes bestimmt wird und
- an diesem unter Fertigungsbedingungen in der jeweiligen Werkzeugmaschine bearbeiteten Werkstück anschließend maschinenbedingt verursachte Abweichungen vom Soil des Fertigform-Datensatzes mittels Messungen erfasst werden zur Bildung eines korrigierten Fertigform-Datensatzes,
**dadurch gekennzeichnet,**
- **dass** zum Schleifen eines Steuernockens einer Nockenwelle mit einem Aufmaß bis maximal 0,2 mm für die Steuernocken-Endbeerbeitung durch Subtraktion eines aus Sollabweichungen gebildeten Maschinen-Formfehler-Datensatzes von dem auf einer Abszisse als Null-Linie abgebildeten bzw. bezogenen Fertigform-Datensatz mit nachfolgender Fehlerinvertierung an der Null-Linie ein Formfehler-Vorhalte-Datensatz als ein korrigierter Fertigform-Datensatz zur Eliminierung der maschinenbedingten Formfehler generiert wird und
- durch weiter fortgesetzte Generierungen mittels jeweiliger Subtraktion von einem vorangehend erstellten Formfehler-Vorhalte-Datensatz der Erzielung eines bestimmten Fehlerminimums dient derart, dass
- mittels eines in der rechnergestützten Schleifmaschine eingespeicherten, verfeinerten Formfehler-Vorhalte-Datensatzes, wobei ferner
- verschiedene Formbereiche des Steuernockens in gesonderten Datensätzen erfasst werden und
- diese Datensätze nach einer Korrektur der geometrischen Zuordnung der verschiedenen Formbereiche einer Nockenerhebung und eines Grundkreises einen für beide gemeinsamen Formfehler-Vorhalte-Datensatz bilden, wobei
- eine Drehzahlanpassung lediglich beim Übergang von einem Formbereich in den anderen Formbereich erfolgt und in jedem Formbereich mit einer vorbestimmt konstanten Drehzahl geschliffen wird.

2. Schleifverfahren nach Anspruch 1,
wobei zur maschinellen Messung der Soll-Abweichungen ein mechanischer Abtaster verwendet wird,
**dadurch gekennzeichnet,**
- **dass** als mechanischer Mess-Abtaster eine Rolle in den Abmessungen der im jeweiligen Nockenbetrieb vorgesehenen Rollen verwendet wird, und
- **dass** die durch den räumlich ausgedehnten Berührungsbereich des Abtasters jeweils einen falschen Ort der Soll-Abweichung beschreibenden Messdaten mit eines Rechenprogramms lagekorrigiert in einen maschinenverwendbaren Formfehler-Vorhalte-Datensatz eingeschrieben werden.

## Revendications

1. Procédé de meulage pour une machine-outil assistée par ordinateur pour le meulage de forme, selon lequel
on détermine un enlèvement respectif par meulage d'une pièce suivant une étape d'usinage prédéterminée d'une zone de forme à l'aide d'un jeu de données de machine ou de forme terminée reposant sur des données de construction, et
sur cette pièce usinée dans la machine-outil respective et dans les conditions de fabrication, les déviations du jeu de données de la forme terminée, par rapport à la consigne, et qui sont causées ensuite par l'usinage de la machine, sont saisies par des mesures pour former un jeu de données corrigées, de la forme terminée,
**caractérisé en ce que**
pour meuler une came de commande d'un arbre à cames avec une sur-dimension maximale de 0,2 mm pour l'usinage final de la came de commande, par soustraction d'un jeu de données d'erreurs de forme de la machine, obtenu à partir des déviations de consigne, d'un jeu de données de la forme terminée, copié ou repéré par rapport aux abscisses comme ligne 0, avec inversion consécutive des erreurs de la ligne 0, on génère un jeu de données prédéfinies d'erreurs de forme comme jeu de données corrigées de la forme terminée pour éliminer les erreurs de forme engendrées par la machine et,
en poursuivant la génération, par une soustraction respective du jeu de données prédéfinies d'erreurs de forme, établi précédemment, on réalise un minimum de défauts, prédéterminés pour un jeu de données prédéfinies d'erreurs de forme, affiné, enregistré dans la mémoire d'une machine-outil de meulage assistée par ordinateur et en plus,
on saisit les différentes zones de forme de la came de commande dans des jeux de données séparés, et
ces jeux de données, après une correction de l'association géométrique des différentes zones de forme à un bossage de la came et à un cercle primitif forment un jeu de données prédéfinies d'erreurs de forme commun aux deux zones, et
on effectue une adaptation de la vitesse de rotation uniquement au passage d'une zone de forme à l'autre zone de forme et dans chaque zone de forme on meule avec une vitesse de rotation constante prédéfinie.

2. Procédé de meulage selon la revendication 1, utilisant pour mesurer à la machine les déviations de consigne un palpeur mécanique,
**caractérisé en ce que**
comme palpeur de mesure mécanique on utilise un galet ayant les dimensions des galets prévus ensuite pour coopérer avec les cames, et on corrige la position des données de mesure décrivant un mauvais emplacement de la déviation de consigne occasionné par la zone de contact étendue dans l'espace du palpeur, avec un programme de calcul pour l'enregistrer sous la forme d'un jeu de données prédéfinies d'erreurs de forme, utilisable par une machine.

## Claims

1. A method of grinding to shape, using a computer-controlled machine tool,
- wherein the amount removed from a workpiece on each occasion, during a predetermined step of machining a shape area, is determined by means of a machine data record or a final-shape data record based on construction data and
- subsequent deviations from the set final-shape data record due to the machine in which the workpiece is processed under production conditions are measured in order to form a corrected final-shape data record,
**characterised in that**
- in order to grind a control cam on a camshaft with an overmeasure not exceeding 0.2 mm for the final machining of the control cam, a shape error allowance data record constituting a corrected final-shape data record for eliminating the shape error due to the machine is generated by subtracting a machine shape error data record formed from set deviations from the final shape data record mapped or referred to the zero line or abscissa, with subsequent fault inversion at the zero line, and
- by continued generation, in each case by subtraction of a previously determined shape error allowance data record, is used for obtaining a defined minimum error, such that
- by means of a shape error allowance data record refined and stored in the computer-assisted grinding machine; wherein also
- various shape areas of the control cam are included in separate data records and
- these data records, after correction of the geometrical correlation between the various shape regions of a cam pitch and a base circle, form a shape error allowance data record common to both, wherein
- a speed adjustment is made only on transition from one shape area to another shape area, and grinding proceeds at a predetermined constant speed in each shape area.

2. A method of grinding according to claim 1,
- wherein the deviations from the set value due to the grinding machine are measured by a mechanical scanner,
**characterised in that**
- the mechanical measurement scanner is a roller having the same dimensions as the rollers provided in the respective cam drive, and
- the measured data, which in each case describe the deviations from set values at an incorrect place owing to the spatially extended area of contact with the scanner, have their position corrected by a computer program and are recorded in a shape error allowance data record for use in the grinding machine.
